# EUROPEAN PATENT APPLICATION

(11) **EP 4 772 911 A1**
(43) Date of publication of application: **08.07.2026**
(21) Application number: 24859277.6
(22) Date of filing: 26.07.2024
(51) Int. Cl.: G01T 1/20

(54) **CERAMIC SCINTILLATOR ARRAY, RADIATION DETECTOR, AND RADIATION DETECTION DEVICE**

(30) Priority: 01.09.2023 JP 2023142528
(71) Applicant: Niterra Materials Co., Ltd., Yokohama-shi, Kanagawa 235-0032 (JP)
(72) Inventor: MATSUNAGA Tomoko, Yokohama-shi, Kanagawa 235-0032 (JP); HIRAMATSU Ryosuke, Yokohama-shi, Kanagawa 235-0032 (JP); KONDO Hiroyasu, Yokohama-shi, Kanagawa 235-0032 (JP); TAGUCHI Seina, Yokohama-shi, Kanagawa 235-0032 (JP)
(74) Representative: Hoffmann Eitle
(86) International application number: PCT/JP2024/026775
(87) International publication number: WO 2025/047235

(57) **Abstract**

A ceramic scintillator array 1 of an embodiment includes a plurality of scintillator segments 2 and a reflection layer. A content of chlorine in the reflection layer is 3000 µg/g or less.

## Description

### TECHNICAL FIELD

Embodiments according to the present invention relate to a ceramic scintillator array, a radiation detector, and a radiation detection device.

### BACKGROUND ART

In a field of medical diagnosis, industrial non-destructive test, or the like, a test using a radiation detection device such as an X-ray tomography device (hereinafter, referred to as an "X-ray CT device") is performed.

As the X-ray detector of the X-ray CT device, a detector using a solid scintillator that emits visible light or the like by X-ray excitation together with a photoelectric conversion element is frequently used. In the X-ray detector using the solid scintillator, it is easy to downsize the photoelectric conversion element and to increase the number of channels, and therefore resolution of the X-ray CT device can be further enhanced.

A radiation test device such as an X-ray CT device is used in various fields such as medical use and industrial use. An X-ray detector mounted on an X-ray CT device includes photoelectric conversion elements two-dimensionally arranged vertically and horizontally, and one or more scintillator segments, which are solid scintillators, are provided for one photoelectric conversion element. X-rays incident on the scintillator segment are converted into visible light, the visible light is converted into an electric signal by the photoelectric conversion element, and the electric signal is analyzed by a computer to be imaged.

In recent years, in order to obtain a high-resolution image, photoelectric conversion elements have been downsized, and a pitch between adjacent photoelectric conversion elements has been narrowed. Accordingly, the size of the scintillator segment is also reduced.

A reflection layer is provided between adjacent scintillator segments or on an X-ray irradiation surface of the scintillator segment. The visible light generated by the irradiation of the X-rays is reflected by the reflection layer and confined in the scintillator segment, so that the visible light can be efficiently guided to the photoelectric conversion element side. Various studies have been conducted so far on the reflection layer used together with the scintillator segment. For example, Patent Literature 1 describes that a transparent resin having a glass transition point of 50°C or higher and a thermal expansion coefficient of 3.5×10⁻⁵/°C or lower at a temperature higher than the glass transition point is used for the reflection layer of the ceramic scintillator array. This makes it possible to suppress a dimensional change at the time of producing, using, and storing the ceramic scintillator array.

### CITATION LIST

### PATENT LITERATURES

Patent Literature 1: WO 2017/082337 A
Patent Literature 2: JP 2020-173226 A
Patent Literature 3: WO 2022/191214 A

### SUMMARY OF THE INVENTION

### OBJECT OF THE INVENTION

When the ceramic scintillator array is irradiated with X-rays for a long time, the reflection layer tends to be colored. There has been a problem in that the colored reflection layer absorbs a part of visible light generated from the scintillator segment, so that the light output is reduced and the sensitivity of the X-ray detector is lowered.

Various studies have been made to solve such a problem. For example, Patent Literature 2 describes a scintillator array using a cured product of a cationic polymerization initiator or an acid anhydride curing agent for a reflection layer. In the scintillator array described in Patent Literature 2, a decrease in reflectance of the reflection layer due to X-ray irradiation is reduced.

Patent Literature 3 describes a scintillator array using a resin having a C=O bond as a reflection layer. The scintillator array described in Patent Literature 3 can reduce coloring of the reflection layer due to X-ray irradiation.

However, even in the scintillator arrays described in Patent Literatures 2 and 3, there is room for improvement in suppressing a decrease in light output due to long-time X-ray irradiation, and a ceramic scintillator array capable of further suppressing a decrease in light output even when X-ray irradiation is performed for a long time has been required.

An embodiment according to the present invention provides a ceramic scintillator array capable of suppressing a decrease in light output after long-time irradiation of X-rays.

### SOLUTION TO PROBLEM

The above problem is solved by the following embodiments.
<1> A ceramic scintillator array including:
   a plurality of scintillator segments; and a reflection layer, in which
   a content of chlorine in the reflection layer is 3000 µg/g or less.
<2> The ceramic scintillator array according to <1>, in which the reflection layer contains at least one selected from the group consisting of an epoxy resin, a silicon resin, a phenol resin, a urea resin, a melamine resin, an unsaturated polyester, polyurethane, an acrylic resin, polyethylene terephthalate, epoxy-modified silicon, and glycidyl ether.
<3> The ceramic scintillator array according to <1> or <2>, in which the reflection layer contains at least one selected from the group consisting of titanium oxide, aluminum oxide, barium sulfate, zinc oxide, zirconium oxide, and silicon oxide.
<4> The ceramic scintillator array according to any one of <1> to <3>, in which the scintillator segment contains a rare earth oxysulfide phosphor or a garnet structure oxide phosphor.
<5> The ceramic scintillator array according to any one of <1> to <4>, in which the reflection layer is a first reflection layer provided so as to surround a side surface of the scintillator segment.
<6> The ceramic scintillator array according to any one of <1> to <5>, in which the reflection layer is a second reflection layer provided so as to cover an X-ray irradiation surface of the scintillator segment.
<7> A radiation detector including the ceramic scintillator array according to any one of <1> to <6>.
<8> A radiation test device including the radiation detector according to <7>.

### BRIEF DESCRIPTION OF DRAWINGS

[Fig. 1] Fig. 1 is a cross-sectional view illustrating an example of a ceramic scintillator array of an embodiment.
[Fig. 2] Fig. 2 is a plan view illustrating an example of the ceramic scintillator array of the embodiment.
[Fig. 3] Fig. 3 is a cross-sectional view illustrating another example of the ceramic scintillator array of the embodiment.
[Fig. 4] Fig. 4 is a cross-sectional view illustrating an X-ray detector which is an example of a radiation detector of an embodiment.
[Fig. 5] Fig. 5 is a schematic configuration diagram illustrating an X-ray CT device which is an example of a radiation test device of an embodiment.

### BEST MODE FOR CARRYING OUT THE INVENTION

Hereinafter, various embodiments will be described with reference to the drawings. The drawings are schematic diagrams illustrating the embodiments and promoting understanding of the embodiments, and their shapes, dimensions, ratios, and the like may be different from actual ones, but these can be appropriately changed in design in consideration of the following description and known techniques.

### <Ceramic scintillator array>

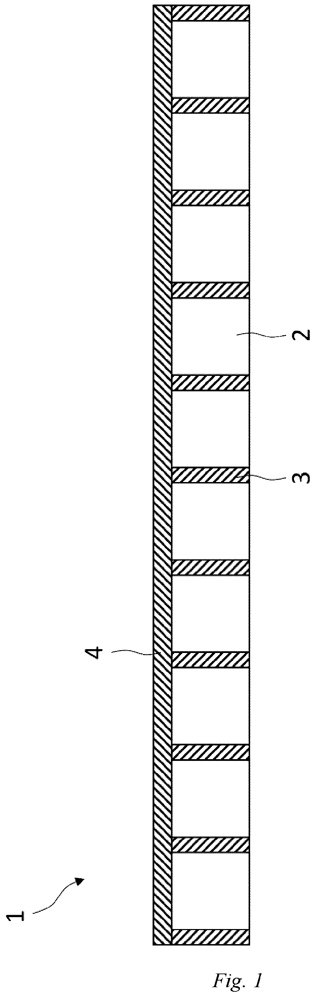

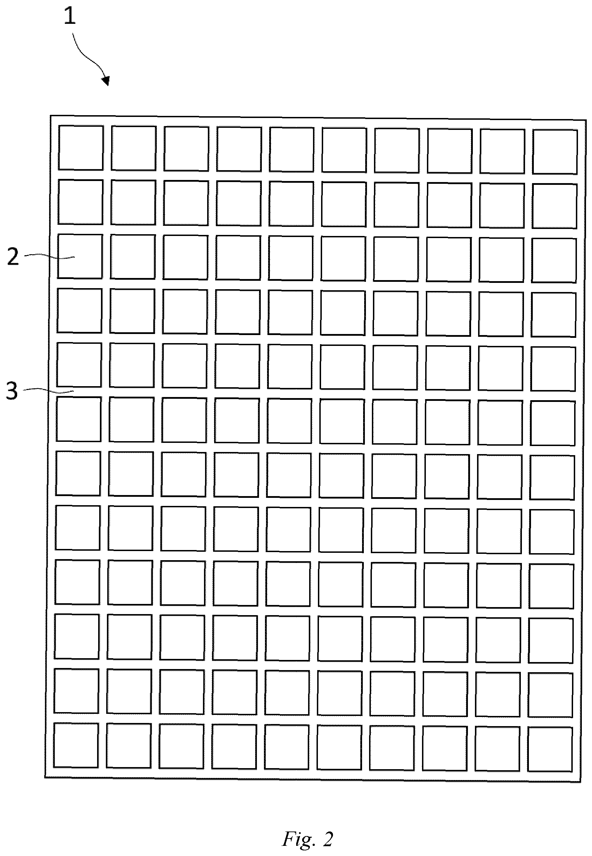

Fig. 1 is a cross-sectional view illustrating an example of a ceramic scintillator array of an embodiment, and Fig. 2 is a plan view illustrating an example of the ceramic scintillator array of the embodiment. A ceramic scintillator array 1 includes a plurality of scintillator segments 2 and a reflection layer. A first reflection layer 3 is interposed as a reflection layer between the adjacent scintillator segments 2. The first reflection layer 3 is bonded to each of the adjacent scintillator segments 2. The plurality of scintillator segments 2 are bonded and integrated by the first reflection layer 3. That is, the ceramic scintillator array 1 has a structure in which the plurality of scintillator segments 2 are integrated by the first reflection layer 3. A second reflection layer 4 is provided as a reflection layer on X-ray irradiation surfaces of the plurality of scintillator segments 2. Note that, in Fig. 2, the second reflection layer 4 is not illustrated.

In the ceramic scintillator array 1 of the embodiment, focusing on one scintillator segment 2, the first reflection layer 3 is provided so as to surround a side surface of the scintillator segment 2, and the second reflection layer 4 is provided so as to cover the X-ray irradiation surface of the scintillator segment 2. In this embodiment, the scintillator segment 2 is covered with the reflection layer except for one surface. The first reflection layer 3 and the second reflection layer 4 may be made of the same material or different materials.

In the scintillator segment 2, a photodiode that detects visible light converted from X-rays by the scintillator segment 2 is directly or indirectly bonded to a surface not covered with the reflection layer (a surface opposite to the X-ray irradiation surface) to form a radiation detector.

The ceramic scintillator array 1 may have a structure in which the plurality of scintillator segments 2 are arranged in a line, or as illustrated in Fig. 2, may have a structure in which a predetermined number of the plurality of scintillator segments 2 is arranged two-dimensionally in each of a longitudinal direction and a lateral direction. In the case of two-dimensionally arranging the plurality of scintillator segments 2, the first reflection layer 3 is provided between the scintillator segments 2 in each of the longitudinal direction and the lateral direction. The second reflection layer 4 is provided on the X-ray irradiation surfaces of the plurality of scintillator segments 2 integrated by the first reflection layer 3. The second reflection layer 4 is bonded to the scintillator segment 2 and the first reflection layer 3 so as to cover the X-ray irradiation surfaces of the plurality of scintillator segments 2. The number of scintillator segments 2 is appropriately set according to the structure and resolution of the X-ray detector.

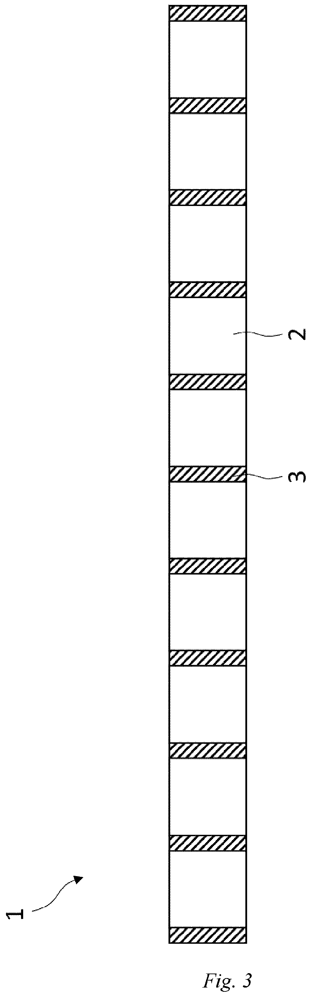

Fig. 3 is a cross-sectional view illustrating another example of the ceramic scintillator array of the embodiment. The ceramic scintillator array 1 illustrated in Fig. 3 is different from the ceramic scintillator array 1 illustrated in Fig. 1 in that the second reflection layer 4 is not provided. That is, the ceramic scintillator array of the embodiment may include the plurality of scintillator segments 2 and the first reflection layer 3 and may not include the second reflection layer 4.

Next, the scintillator segment 2 and the reflection layer constituting the ceramic scintillator array of the embodiment will be described. Note that the features of the reflection layer described below may correspond to the first reflection layer, the second reflection layer, or both the first reflection layer and the second reflection layer.

### <Scintillator segment>

The type of the scintillator segment 2 in the ceramic scintillator array 1 of the embodiment is not particularly limited, and is, for example, a rare earth oxysulfide phosphor or a garnet structure oxide phosphor. The scintillator segment 2 includes, for example, one type of phosphor or two or more types of phosphors.

Examples of the rare earth oxysulfide phosphor include rare earth oxysulfide phosphors containing praseodymium (Pr) as an emission center. Examples of the rare earth oxysulfide constituting the rare earth oxysulfide phosphor include oxysulfides of rare earth elements such as yttrium (Y), gadolinium (Gd), lanthanum (La), and lutetium (Lu).

Examples of the garnet structure oxide phosphor include gadolinium gallium aluminum garnet (GGAG), lutetium aluminum garnet (LuAG), lutetium gallium aluminum garnet (LuGAG), and gadolinium aluminum garnet (GdAG).

The scintillator segment 2 is preferably configured by a rare earth oxysulfide phosphor having a composition represented by general formula:

RE₂O₂S:Pr ... (1)

wherein RE represents at least one element selected from the group consisting of Y, Gd, La, and Lu.

Among the rare earth elements described above, Gd has a large X-ray absorption coefficient, and contributes to improvement of light output of the ceramic scintillator array 1. Therefore, in the ceramic scintillator array 1 of the embodiment, it is further preferable to use a Gd₂O₂S:Pr phosphor as the scintillator segment 2. Note that a part of Gd may be substituted with another rare earth element. At this time, the amount of substitution of Gd by other rare earth element is preferably 10 mol% or less.

That is, in the ceramic scintillator array 1 of the embodiment, it is preferable to use, as the scintillator segment 2, a rare earth oxysulfide phosphor represented by general formula:

(Gd_{1-X},RE_{X})₂O₂S:Pr ... (2)

wherein RE represents at least one element selected from the group consisting of Y, La, and Lu, and X is a number (atomic ratio) satisfying 0 ≤ X ≤ 0.1.

In the ceramic scintillator array 1 of the embodiment, praseodymium (Pr) is contained as the emission center of the rare earth oxysulfide phosphor. Pr can reduce afterglow as compared with other rare earth elements. Therefore, the rare earth oxysulfide phosphor containing Pr as an emission center is effective as a material of a solid scintillator constituting the radiation detector.

The content of Pr in the rare earth oxysulfide phosphor is preferably in a range of 0.001 to 10 mol% and more preferably in a range of 0.01 to 1 mol%, with respect to a phosphor host (a compound represented by RE₂O₂S in Formula (1)). As a result, the phosphor exhibits high light emission efficiency.

When the content of Pr is more than 10 mol%, a light output may decrease, and thus attention needs to be paid. When the content of Pr is less than 0.001 mol%, the effect as an emission center cannot be sufficiently obtained.

In the rare earth oxysulfide phosphor used in the embodiment, in addition to Pr as an emission center, a small amount of cerium (Ce) may be contained as an activator. Ce exhibits an effect of suppressing afterglow. The content of Ce is preferably in a range of 0.00001 to 0.1 mol% with respect to the phosphor host.

In the ceramic scintillator array 1 of the embodiment, the scintillator segment 2 is preferably made of a high purity rare earth oxysulfide phosphor. Since impurities cause a decrease in sensitivity of the scintillator segment 2, it is preferable to reduce the amount of impurities contained in the scintillator segment 2 as much as possible. In particular, since a phosphate radical (PO₄) causes a decrease in sensitivity, the content of the phosphate radical in the scintillator segment 2 is preferably 100 ppm or less. When the scintillator segment 2 is densified using a fluoride or the like as a sintering aid, the sintering aid remains as impurities in the scintillator segment 2, resulting in a decrease in sensitivity.

The scintillator segment 2 is preferably a solid scintillator having a cubic shape or a rectangular parallelepiped shape. The volume of the scintillator segment 2 is preferably 1 mm³ or less. By reducing the size of the scintillator segment 2, an image to be detected can be enhanced in definition.

The dimensions of the length, width, and thickness of the scintillator segment 2 are not necessarily limited, but are each preferably 2 mm or less and more preferably 1.5 mm or less. When the ceramic scintillator array 1 is irradiated with X-rays, the X-rays are converted into visible light in the scintillator segment 2. The visible light travels inside the scintillator segment 2, but when the optical path length of the visible light increases, the visible light is scattered and attenuated. By setting the dimensions of the length, width, and thickness of the scintillator segment 2 to a certain value or less, the optical path length of the visible light is reduced, and the visible light can be efficiently reached to the photoelectric conversion element.

### <Reflection layer>

The reflection layer includes, for example, reflection particles and a transparent resin that embeds the reflection particles. When the reflection layer contains the reflection particles, the reflection layer can reflect visible light to be confined in the scintillator segment 2, and the visible light can be efficiently guided to the photoelectric conversion element. Since the resin constituting the reflection layer has high transparency, absorption of visible light into the reflection layer can be suppressed, and a decrease in light output of the ceramic scintillator array 1 can be suppressed.

Examples of the reflection particles include white pigments such as titanium oxide, aluminum oxide, barium sulfate, zinc oxide, zirconium oxide, and silicon oxide.

Therefore, the reflection layer in the embodiment preferably contains at least one selected from the group consisting of titanium oxide, aluminum oxide, barium sulfate, zinc oxide, zirconium oxide, and silicon oxide.

From the viewpoint of efficiently guiding visible light from the scintillator segment 2 to the photoelectric conversion element, the reflection layer preferably has a high reflectance, and for example, preferably has a reflectance of 80% or more with respect to visible light having a wavelength of 500 to 800 nm.

From the viewpoint of achieving a high reflectance, in the case of using reflection particles, the content of the transparent resin in the reflection layer is preferably 40 to 60 mass%, and the content of the reflection particles in the reflection layer is preferably 40 to 60 mass%. Note that the median particle size (median diameter) of the reflection particles is preferably 0.2 to 0.4 µm.

Examples of the transparent resin include an epoxy resin, a silicon resin, a phenol resin, a urea resin, a melamine resin, an unsaturated polyester, polyurethane, an acrylic resin, polyethylene terephthalate, epoxy-modified silicon, and glycidyl ether.

For example, in the case of a ceramic scintillator used as an X-ray CT device, it is known that the temperature reaches up to 50 to 60°C during use. Therefore, the transparent resin used for the reflection layer preferably has heat resistance, and it is particularly preferable to use a thermosetting resin having excellent heat resistance. In the case of using a transparent resin having low heat resistance, deformation or pitch deviation may occur during use.

Therefore, the reflection layer in the embodiment preferably contains at least one selected from the group consisting of an epoxy resin, a silicon resin, a phenol resin, a urea resin, a melamine resin, an unsaturated polyester, polyurethane, an acrylic resin, polyethylene terephthalate, epoxy-modified silicon, and glycidyl ether and among them, from the viewpoint of handleability, transparency, storage stability, and the like required at the time of producing the reflection layer, the reflection layer preferably contains an epoxy resin.

When the epoxy resin is cured, a curing agent is generally used. Examples of the curing agent include aliphatic polyamine, aromatic polyamine, acid anhydride, an imidazole compound, and dicyandiamide. Among them, at least one selected from the group consisting of aliphatic polyamine and aromatic polyamine is preferable because it is suitable for pot life and glass transition temperature.

When a transparent resin is cured using a curing agent, curing is completed by forming a macromolecule through a polymerization reaction between the transparent resin and the curing agent. Therefore, it is preferable to mix a curing agent in an amount sufficient to cause the polymerization reaction of the entire amount of the transparent resin. When the mixing amount of the curing agent with respect to the transparent resin is too large, an unreacted curing agent remains in a cured product, and the characteristics of the cured product may be changed. Therefore, the content of the curing agent is preferably appropriately adjusted according to the type of the transparent resin or the curing agent to be used. For example, the content of the curing agent is preferably 10 parts by weight or more, and more preferably 20 parts by weight or more with respect to 100 parts by weight of the transparent resin. The content of the curing agent is preferably 30 parts by weight or less, and more preferably 25 parts by weight or less with respect to 100 parts by weight of the transparent resin.

In the embodiment, the content of chlorine in the reflection layer is 3000 µg/g or less, preferably 2000 µg/g or less, more preferably 1300 µg/g or less, and further preferably 1000 µg/g or less. When the content of chlorine in the reflection layer is equal to or less than a certain value, the reflection layer is less likely to be colored even when the reflection layer is irradiated with X-rays for a long time, and a decrease in light output of the ceramic scintillator array can be suppressed even after the irradiation with X-rays for a long time.

When chlorine is contained in the reflection layer, the reason why the light output of the ceramic scintillator array is likely to decrease due to long-time irradiation with X-rays is considered as follows.

Chlorine present in the reflection layer generates chlorine radicals by long-time irradiation with X-rays. The generated chlorine radicals react with the metal element contained in the reflection particles to generate generally colored metal radicals.

Alternatively, the generated chlorine radicals react with the transparent resin constituting the reflection layer to generate organic radicals such as alkyl radicals, alkoxy radicals, and nitroxyl radicals. Organic radicals are generally unstable, and once they are generated, radical substitution reactions occur sequentially. As the radical substitution reaction proceeds, the molecular structure of the transparent resin is destroyed and the resin is colored.

It is considered that the colored metal radicals and the colored resin absorb the visible light without reflecting the visible light, and as a result, the light output of the ceramic scintillator array decreases.

Some metal elements that react with chlorine radicals to generate metal radicals easily return to the state before reacting with chlorine radicals. Therefore, even after irradiation with X-rays for a long time, colored metal radicals may decrease with the lapse of time. On the other hand, a transparent resin having a broken molecular structure is less likely to return to its original state once it is broken, and the coloring of the resin is less likely to be reduced with the lapse of time after long-time irradiation with X-rays. Therefore, it is considered that the colored resin has a greater influence on the reduction in the light output of the ceramic scintillator array than the colored metal radicals.

It is most preferable that the reflection layer does not contain chlorine. That is, the content of chlorine in the reflection layer is most preferably 0 µg/g. However, since the transparent resin constituting the reflection layer may contain chlorine as an impurity due to the production method, the content of chlorine in the reflection layer is practically 300 µg/g or more, more practically 400 µg/g or more, and further practically 500 µg/g or more. In general, even when the content of chlorine in the reflection layer is 1000 µg/g or more, an effect that a decrease in light output of the ceramic scintillator array can be suppressed even after the irradiation with X-rays for a long time is sufficiently exhibited.

The reason why chlorine may be contained as an impurity in the transparent resin will be described using an epoxy resin as an example.

Examples of the main method for producing the epoxy resin include an epichlorohydrin method and an oxidation method. The epichlorohydrin method is a conventional method for producing an epoxy resin, and is a method for synthesizing an epoxy resin using a condensation reaction between a monomer as a raw material and epichlorohydrin. For example, a bisphenol A type epoxy resin, which is a typical epoxy resin, is obtained by a condensation reaction between a monomer of bisphenol A and epichlorohydrin.

When an epoxy resin is produced by an epichlorohydrin method, a chlorine-containing component, hydrolyzable chlorine (unreacted product), and bondable chlorine (excessive adduct) are generated as by-products in addition to the epoxy resin as a main product. In order to remove these by-products from the epoxy resin, the epoxy resin is repeatedly washed with alkali. However, it is difficult to completely remove the by-products even when washing with alkali, and some of the by-products remain in the epoxy resin. Therefore, the epoxy resin produced by the epichlorohydrin method contains chlorine as an impurity.

Since the production of an epoxy resin by the epichlorohydrin method is easier than the production of an epoxy resin by the oxidation method, most of epoxy resins distributed in the market are produced by the epichlorohydrin method. Therefore, most epoxy resins distributed in the market contain chlorine as an impurity.

The content of chlorine in the reflection layer is measured by, for example, combustion ion chromatography. Specifically, measurement is performed by the method described in Examples described later.

### <Method for forming reflection layer>

The reflection layer is formed as follows, for example.

A plurality of scintillator segments processed into a predetermined shape are arranged at regular intervals. A composition obtained by mixing a transparent resin, reflection particles, and a curing agent is applied or filled between adjacent scintillator segments. The first reflection layer can be formed by curing the composition by heat.

Next, the composition obtained by mixing a transparent resin, reflection particles, and a curing agent is applied to the X-ray irradiation surface of the ceramic scintillator array including the scintillator segment and the first reflection layer. The second reflection layer can be formed by thermally curing the newly applied composition.

The second reflection layer can also be formed by bonding a predetermined film to the X-ray irradiation surface of the ceramic scintillator array using an adhesive. Examples of the film to be the second reflection layer include a film obtained by processing a composition containing a transparent resin and reflection particles into a sheet shape using a doctor blade or the like and curing the composition. However, the film to be the second reflection layer is not limited thereto, and for example, a commercially available white film can also be used.

### <Radiation detector and radiation test device>

Next, a radiation detector and a radiation test device of an embodiment will be described.

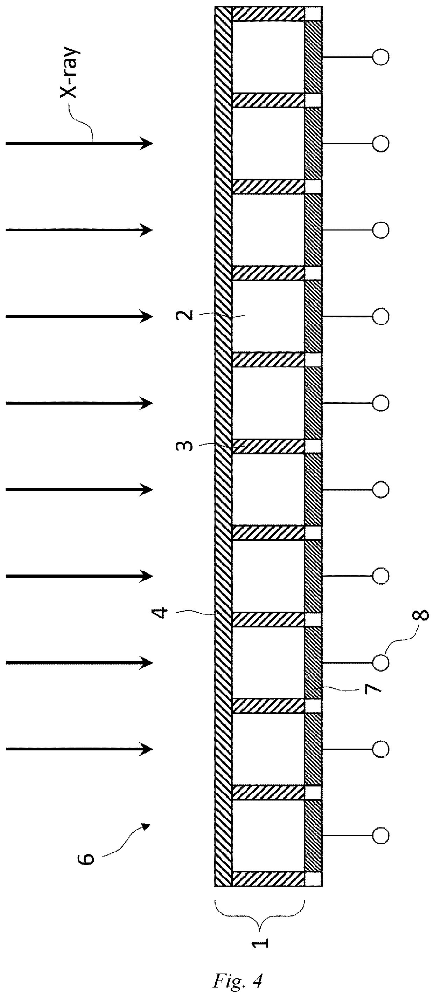

The radiation detector of the embodiment includes the above-described ceramic scintillator array 1 of the embodiment as a solid scintillator that emits visible light according to the amount of incident radiation, and further includes a photoelectric conversion element that receives visible light from the solid scintillator and converts the visible light into an electric signal. Fig. 4 illustrates an X-ray detector which is an example of a radiation detector of an embodiment. An X-ray detector 6 illustrated in Fig. 4 includes the ceramic scintillator array 1 as a solid scintillator and a photodiode 7 as a photoelectric conversion element.

Each scintillator segment 2 has an X-ray irradiation surface, and the photodiode 7 is bonded to a surface opposite to the X-ray irradiation surface. The photodiode 7 is disposed so as to correspond to each scintillator segment 2 constituting the ceramic scintillator array 1. The X-ray detector 6 is configured in this manner.

In the X-ray detector 6 described above, when the X-ray is applied from the second reflection layer 4 side, the X-ray is incident on each scintillator segment 2, and the visible light is emitted from the scintillator segment 2 according to the incident X-ray dose. The visible light emitted from the scintillator segment 2 is detected by the photodiode 7. The visible light emitted based on the incident X-ray dose is converted into an electric signal by the photodiode 7, and then transmitted from an output terminal 8 to a computer.

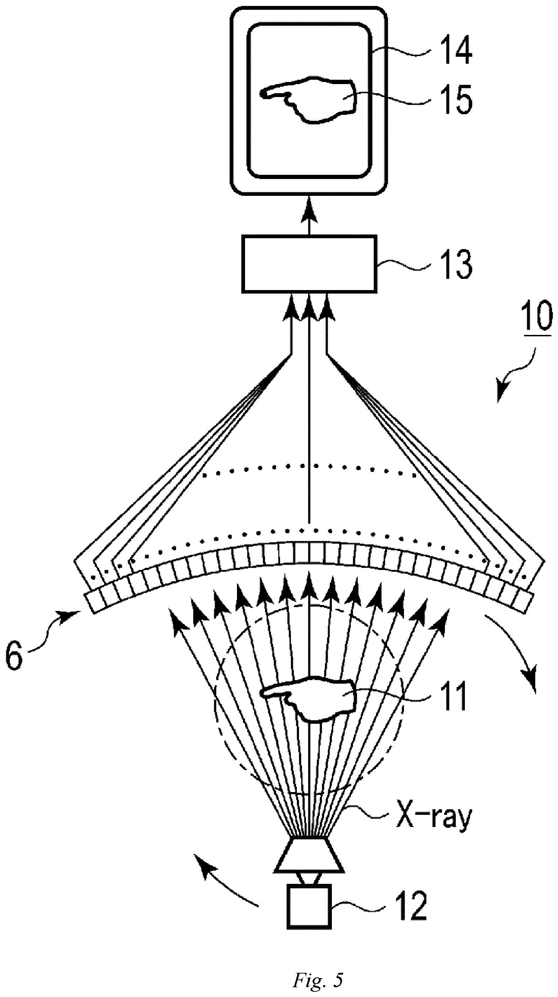

The radiation test device of the embodiment includes a radiation source that emits radiation toward a specimen, and a radiation detector that detects the radiation that has passed through the specimen. As the radiation detector, the above-described radiation detector of the embodiment described above is used. Fig. 5 illustrates an X-ray CT device 10 which is an example of a radiation test device of an embodiment. The X-ray detector 6 is attached to, for example, an inner wall surface of an arc on which a specimen 11 is disposed. An X-ray tube 12 that emits an X-ray is installed at a center of an arc to which the X-ray detector 6 is attached. The specimen 11 is disposed between the X-ray detector 6 and the X-ray tube 12. A collimator (not illustrated) is provided on the X-ray irradiation surface side of the X-ray detector 6.

The X-ray detector 6 and the X-ray tube 12 are configured to photograph the specimen 11 while rotating about the specimen 11. Image information of the specimen 11 is three-dimensionally collected from different angles. A signal obtained by the X-ray imaging (an electric signal converted by the photoelectric conversion element) is processed by a computer 13 and displayed as a specimen image 15 on a display 14. The specimen image 15 is, for example, a tomographic image of the specimen 11. As illustrated in Fig. 2, it is also possible to configure the multi-tomographic X-ray CT device 10 by using the ceramic scintillator array 1 in which the scintillator segments 2 are two-dimensionally arranged. In this case, a plurality of tomographic images of the specimen 11 are simultaneously photographed, and for example, an imaging result can be three-dimensionally depicted.

With such a technique, the radiation test device of the embodiment also contributes to improvement of test accuracy and the like. The radiation test device of the embodiment can be applied not only to the X-ray test for medical diagnosis of the human body but also to the X-ray test of animals or the X-ray test for industrial use.

The radiation test device of the embodiment further includes a radiation detector having the ceramic scintillator array of the embodiment. As described above, in the ceramic scintillator array of the embodiment, since the content of chlorine is reduced in at least one selected from the group consisting of the first reflection layer and the second reflection layer, it is possible to suppress a decrease in light output after irradiation with X-rays for a long time.

### EXAMPLES

Next, specific Examples of the embodiments and evaluation results thereof will be described.

The epoxy resin and the curing agent used in the ceramic scintillator arrays of Examples 1 to 5 and Comparative Examples 1 to 5 below are as follows.
Epoxy resin A:
   Hydrogenated bisphenol A diglycidyl ether, trade name: jER (registered trademark) YX-8000, manufactured by Mitsubishi Chemical Corporation
Epoxy resin B:
   Hydrogenated bisphenol A diglycidyl ether, trade name: jER (registered trademark) YX-8000D, manufactured by Mitsubishi Chemical Corporation
Epoxy resin C:
   Hydrogenated bisphenol A diglycidyl ether, trade name: EP-4080E, manufactured by ADEKA CORPORATION
Curing agent:
   Alicyclic polyamine curing agent, trade name: NBDA, manufactured by Mitsui Fine Chemicals, Inc.

### [Example 1]

### <Preparation of scintillator segment>

A gadolinium oxysulfide phosphor powder having a median particle size (median diameter) of 5 to 10 µm and a composition of (Gd_{0.99928},Pr_{0.0007},Ce_{0.00002})₂O₂S was molded by a wet cold isostatic pressing (wet-CIP) treatment. A molded body was processed in accordance with a cylindrical capsule made of tantalum (Ta) and having an outer diameter of 90 mm and a height of 150 mm, the periphery of the molded body was covered with a molybdenum (Mo) foil, and then the molded body was put in a capsule and degassed and sealed. The capsule made of Ta was then set in a hot isostatic pressing (HIP) treatment apparatus. An argon gas as a pressurizing medium was sealed in the HIP treatment apparatus and treatment was performed under conditions of a pressure of 180 MPa and a temperature of 1300 to 1500°C for three hours to prepare a sintered body.

After cooling, the sintered body was taken out, and a flat plate having a thickness of 2.0 mm was cut out along the height direction of the cylinder with a wire saw. In the plane of the flat plate, grooving was performed using a blade at intervals of 1.39 mm in length and 1.18 mm in width to prepare a plurality of scintillator segments. The width of the groove was 0.10 mm in the longitudinal direction and 0.27 mm in the lateral direction.

### <Preparation of reflection layer composition>

As a transparent resin, an epoxy resin A was prepared.

As a white pigment, a mixture of 90 mass% of a titanium oxide powder and 10 mass% of an aluminum oxide powder was prepared.

The transparent resin, the curing agent, and the white pigment were mixed at a mass ratio of 100 : 20 : 120. In this way, a reflection layer composition was prepared.

### <Preparation of ceramic scintillator array>

The grooves between the scintillator segments were filled with the reflection layer composition. The reflection layer composition was thermally cured to form a first reflection layer, and adjacent scintillator segments were bonded to each other with the first reflection layer interposed therebetween to prepare a ceramic scintillator array as illustrated in Figs. 2 and 3.

One surface of the ceramic scintillator array was polished and exposed, and then one surface was covered with a reflection layer composition and thermally cured to form a second reflection layer. Finally, both surfaces were polished so as to have a total thickness of 1.0 mm and a thickness of the second reflection layer of 0.17 mm. A ceramic scintillator array of Example 1 including a scintillator segment, a first reflection layer, and a second reflection layer was prepared by the method described above.

### [Example 2]

A ceramic scintillator array of Example 2 was prepared in the same manner as in Example 1 except that the epoxy resin B was used as the transparent resin, and the transparent resin, the curing agent, and the white pigment were mixed at a mass ratio of 100 : 25 : 120.

### [Example 3]

A ceramic scintillator array of Example 3 was prepared in the same manner as in Example 2 except that a mixture of 97 mass% of the epoxy resin A and 3 mass% of the epoxy resin C was used as the transparent resin.

### [Example 4]

A ceramic scintillator array of Example 4 was prepared in the same manner as in Example 2 except that a mixture of 95 mass% of the epoxy resin A and 5 mass% of the epoxy resin C was used as the transparent resin.

### [Example 5]

A ceramic scintillator array of Example 5 was prepared in the same manner as in Example 2 except that a mixture of 92 mass% of the epoxy resin A and 8 mass% of the epoxy resin C was used as the transparent resin.

### [Comparative Example 1]

A ceramic scintillator array of Comparative Example 1 was prepared in the same manner as in Example 2 except that a mixture of 80 mass% of the epoxy resin A and 20 mass% of the epoxy resin C was used as the transparent resin.

### [Comparative Example 2]

A ceramic scintillator array of Comparative Example 2 was prepared in the same manner as in Example 1 except that a mixture of 80 mass% of the epoxy resin A and 20 mass% of the epoxy resin C was used as the transparent resin.

### [Comparative Example 3]

A ceramic scintillator array of Comparative Example 3 was prepared in the same manner as in Example 2 except that a mixture of 50 mass% of the epoxy resin A and 50 mass% of the epoxy resin C was used as the transparent resin.

### [Comparative Example 4]

A ceramic scintillator array of Comparative Example 4 was prepared in the same manner as in Example 1 except that a mixture of 50 mass% of the epoxy resin A and 50 mass% of the epoxy resin C was used as the transparent resin.

### [Comparative Example 5]

A ceramic scintillator array of Comparative Example 5 was prepared in the same manner as in Example 2 except that the epoxy resin C was used as the transparent resin.

### [Measurement of content of chlorine in reflection layer]

The reflection layer composition prepared in each of Examples 1 to 5 and Comparative Examples 1 to 5 was thermally cured to form a reflection layer, and then subjected to combustion under an oxygen inflow using an automatic sample combustion device (trade name: AQF-2100H, electric furnace: HF-210, absorption unit: GA-210, automatic sample changer for solids: ACS-240S, manufactured by Mitsubishi Chemical Analytech Co., Ltd.). The generated gas was collected with an absorption liquid (hydrogen peroxide solution).

The absorption liquid was analyzed with an ion chromatography analyzer (trade name: ICS-1600, manufactured by Thermo Fisher Scientific Co., Ltd.), and the content of chlorine in the reflection layer was measured.

Measurement results are presented in Table 1.

### [Evaluation of light output]

For each of the ceramic scintillator arrays of Examples 1 to 5 and Comparative Examples 1 to 5, a photodiode was bonded to a surface opposite to the X-ray irradiation surface to form an X-ray detector as illustrated in Fig. 4. Emission energy E₀ detected by a photodiode when an X-ray detector was irradiated with X-rays of 120 kV and 60 to 80 mA was measured such that the detected emission energy was equivalent every time.

Next, the X-ray detector was irradiated with X-rays of 4.2 kGy. Note that the X-ray irradiation amount of 4.2 kGy corresponds to the X-ray usage amount of about 10 years of the medical X-ray CT device.

Even after the X-ray irradiation of 4.2 kGy, the emission energy E₁ detected by the photodiode when the X-ray detector was irradiated with X-rays of 120 kV and 60 to 80 mA was measured in the same manner as before irradiation with X-rays of 4.2 kGy.

A value (E₁/E₀) of E₁ with respect to E₀ was taken as the light output retention ratio. The larger the light output retention ratio is, the more the decrease in light output can be suppressed even when the X-ray is irradiated for a long period of time.

Table 1 shows relative values of the light output retention ratios in Examples 1 to 5 and Comparative Examples 1 to 5 when the light output retention ratio in Example 1 is 100%.

**[Table 1]**

| Table 1 | Blending of transparent resin [mass%] | | | Content of curing agent with respect to 100 parts by mass of transparent resin [parts by mass] | Content of chlorine in reflection layer [µg/g] | Relative value of light output retention ratio [%] |
|---|---|---|---|---|---|---|
| | Epoxy resin A | Epoxy resin B | Epoxy resin C | | | |
| Example 1 | 100 | 0 | 0 | 20 | 350 | 100.00 |
| Example 2 | 0 | 100 | 0 | 25 | 430 | 101.81 |
| Example 3 | 97 | 0 | 3 | 25 | 650 | 97.67 |
| Example 4 | 95 | 0 | 5 | 25 | 940 | 101.81 |
| Example 5 | 92 | 0 | 8 | 25 | 1300 | 94.04 |
| Comparative Example 1 | 80 | 0 | 20 | 25 | 3100 | 89.25 |
| Comparative Example 2 | 80 | 0 | 20 | 20 | 3600 | 92.75 |
| Comparative Example 3 | 50 | 0 | 50 | 25 | 7700 | 88.73 |
| Comparative Example 4 | 50 | 0 | 50 | 20 | 8300 | 92.23 |
| Comparative Example 5 | 0 | 0 | 100 | 25 | 15000 | 92.36 |

As is apparent from Table 1, in the ceramic scintillator arrays of Comparative Examples 1 to 5 in which the content of chlorine in the reflection layer was more than 3000 µg/g, the relative value of the light output retention ratio was 92.75% or less, whereas in the ceramic scintillator arrays of Examples 1 to 5 in which the content of chlorine in the reflection layer was 3000 µg/g or less, the relative value of the light output retention ratio could be maintained at 94.04% or more. From this point, it can be seen that the ceramic scintillator arrays of Examples 1 to 5 in which the content of chlorine in the reflection layer is 3000 µg/g or less can suppress a decrease in light output after irradiation with X-rays of 4.2 kGy.

It can be seen that in the ceramic scintillator arrays of Examples 1 to 4 in which the content of chlorine in the reflection layer is 940 µg/g or less, the relative value of the light output retention ratio can be maintained at 97.67% or more, and a decrease in light output after irradiation with X-rays of 4.2 kGy can be further suppressed.

Whereas some embodiments of the present invention have been described, these embodiments are merely presented as examples, and not intended to limit the scope of the invention. These novel embodiments can be implemented in various other forms, and various omissions, replacements, and changes can be made without departing from the spirit of the invention. These embodiments and modifications thereof are included in the scope and gist of the invention, and are included in the invention described in the claims and an equivalent scope thereof.

### REFERENCE SIGNS LIST

- 1: Ceramic scintillator array
- 2: Scintillator segment
- 3: First reflection layer
- 4: Second reflection layer
- 6: X-ray detector
- 7: Photodiode
- 8: Output terminal
- 10: X-ray CT device
- 11: Specimen
- 12: X-ray tube
- 13: Computer
- 14: Display
- 15: Specimen image

## Claims

1. A ceramic scintillator array comprising:
a plurality of scintillator segments; and a reflection layer, wherein
a content of chlorine in the reflection layer is 3000 µg/g or less.

2. The ceramic scintillator array according to claim 1, wherein the reflection layer contains at least one selected from the group consisting of an epoxy resin, a silicon resin, a phenol resin, a urea resin, a melamine resin, an unsaturated polyester, polyurethane, an acrylic resin, polyethylene terephthalate, epoxy-modified silicon, and glycidyl ether.

3. The ceramic scintillator array according to claim 1 or 2, wherein the reflection layer contains at least one selected from the group consisting of titanium oxide, aluminum oxide, barium sulfate, zinc oxide, zirconium oxide, and silicon oxide.

4. The ceramic scintillator array according to claim 1 or 2, wherein the scintillator segment contains a rare earth oxysulfide phosphor or a garnet structure oxide phosphor.

5. The ceramic scintillator array according to claim 1 or 2, wherein the reflection layer is a first reflection layer provided so as to surround a side surface of the scintillator segment.

6. The ceramic scintillator array according to claim 1 or 2, wherein the reflection layer is a second reflection layer provided so as to cover an X-ray irradiation surface of the scintillator segment.

7. A radiation detector comprising the ceramic scintillator array according to claim 1 or 2.

8. A radiation test device comprising the radiation detector according to claim 7.
